Europäisches Patentamt

European Patent Office

Office européen des brevets

(19)

(11) Veröffentlichungsnummer: **0 280 080 B1**

(12) # EUROPÄISCHE PATENTSCHRIFT

(45) Veröffentlichungstag der Patentschrift: **11.12.91**

(51) Int. Cl.⁵: **A22C 17/02**, A22C 17/00

(21) Anmeldenummer: **88101522.6**

(22) Anmeldetag: **03.02.88**

(54) **Bearbeitungsmaschine für Geflügelfleisch o. dgl.**

(30) Priorität: **07.02.87 DE 3703836**

(43) Veröffentlichungstag der Anmeldung:
**31.08.88 Patentblatt 88/35**

(45) Bekanntmachung des Hinweises auf die
Patenterteilung:
**11.12.91 Patentblatt 91/50**

(84) Benannte Vertragsstaaten:
**AT BE CH DE ES FR GB IT LI NL SE**

(56) Entgegenhaltungen:
**NL-A- 7 707 771      NL-A- 8 302 495**
**US-A- 3 038 197      US-A- 3 075 236**
**US-A- 4 041 572      US-A- 4 385 421**

(73) Patentinhaber: **Lindert, Heinrich**
**Kölkebecker Strasse 62**
**W-4802 Halle(DE)**

(72) Erfinder: **Lindert, Heinrich**
**Kölkebecker Strasse 62**
**W-4802 Halle(DE)**

(74) Vertreter: **Hoefer, Theodor, Dipl.-Ing. et al**
**Ludwig-Ganghofer-Strasse 20**
**W-8022 Grünwald bei München(DE)**

## Beschreibung

Die Erfindung betrifft eine Bearbeitungsmaschine für Geflügelteile, Fleischstücke, o.dgl. als Werkstücke mit einer umlaufenden Fördereinrichtung, wie Kette, Band, an welcher als Haltevorrichtungen Fahrgestelle mit Greifarmen, Nagelplatten o.dgl. für das Festhalten jeweils eines Werkstücks angeordnet sind. Eine derartige Bearbeitungsmaschine ist aus der US-A-4 041 572 bekannt.

Eine solche Anlage soll beispielsweise zur Auslösung der Knochen von Geflügelkeulen verwendet werden. Die Entskelettierung auch anderer Fleischstücke ist damit möglich. Es besteht eine großer Bedarf an Geflügel-Weißfleisch, beispielsweise Hähnchen-Brustfilets. Außer dem Brustfleisch soll möglichst auch das an den Geflügelkeulen befindliche Weißfleisch verwendet werden können, wozu rationell arbeitende Bearbeitungsanlagen erforderlich sind. Das Fleisch der Hähnchenkeulen kann beispielsweise zur Verarbeitung von Feinkosterzeugnissen, wie Geflügelsalat mit und ohne Haut verwendet werden.

Das manuelle Auslösen der Knochen von Geflügelkeulen ist zeitaufwendig und umständlich und daher lohnintensiv. Es ist daher auch üblich, die fleischigere Oberkeule oberhalb eines Knochengelenks von der Unterkeule zu trennen und nur das Fleisch der Oberkeule zu verwenden.

Soweit es bereits bekannt ist, Knorpel, Knochen o.dgl. von Geflügelfleisch zu trennen, so wird hierbei einerseits das vorstehende Ende eines Knochens und andererseits das umgebende Fleisch jeweils in Klemmeinrichtungen eingespannt, die sich relativ gegeneinander bewegen und damit das Fleisch von den Knochen o.dgl. durch eine Abstreifbewegung trennen. Hierbei erfolgt aber kein sauberer Schnitt, sondern ein nachteiliges Zerreißen.

Der Erfindung liegt die Aufgabe zugrunde, eine Bearbeitungsmaschine zu schaffen, die es ermöglich, insbesondere bei Geflügel das Fleisch von darin eingebetteten Knochen, Knorpel, ab- oder ausschneidend möglichst vollständig und großstückig im automatischen Durchlauf abzulösen.

Diese Aufgabe wird erfindungsgemäß bei einer Bearbeitungsmaschine der genannten Gattung durch eine den Knorpel, Knochen, Knochenteile o.dgl. aus dem Fleisch austrennende, stanzenartige, ringförmige Schneideinrichtung gelöst, die quer zur Bewegungsrichtung des Werkstücks automatisch verschiebbar am Maschinengestell gelagert ist.

Mit einer derartigen stanzenartigen Schneideinrichtung ist es möglich, automatisch innerhalb einer Bearbeitungsmaschine mit durchlaufenden Werkstücken insbesondere Knorpel in Gelenken von Geflügelkeulen schneiden herauszutrennen, so daß bei quer geteilter Geflügelkeule die voneinander getrennten Knochen (Oberkeule und Unterkeule) aus dem Fleisch leicht herausgelöst werden können und dabei das Fleisch weitgehend ganzstückig gewonnen wird.

Die Aufgabe wird erfindungsgemäß weiterhin durch eine Bearbeitungsmaschine gelöst, die eine Schneidstation mit einem parallel zur Bewegungsrichtung der Transporteinrichtung sich bewegenden Sägeband und einer zusätzlichen Befestigungseinrichtung für das Werkstück, wie Fleischstück, Geflügelteil, o.dgl. aufweist. Damit ist es möglich, das den Knochen enthaltende Fleischstück, beispielsweise eine Geflügelkeule, in Längsrichtung des Knochens in dessen Mitten aufzuschneiden und die beiden Knochenhälften aus den beiden Fleischstückhälften in einfacher Weise zu entfernen.

Bevorzugt ist das Werkstück an dem waagerecht verfahrbaren Fahrgestell, von diesem aufragend, auf einem kleineren Teil seiner Länge zwischen den Greifarmen einspannbar. Dadurch kann oberhalb der Einspannstelle der größte Teil des Fleischstücks durchgesägt werden, während nur ein kleiner Längenanteil für die Einspannung erforderlich und daher für die Fleischerzeugung nicht verwertbar ist. Dieser Teil enthält aber bei Geflügelkeulen vorwiegend sehniges Gewebe, was ohnehin nicht sehr geschätzt wird. Bei einer so eingespannten Geflügelkeule ist nur der unterste Teil der Unterkeule eingespannt, der größte Teil der Unterkeule und die von dem knorpeligen Gelenk ausgehende gesamte Oberkeule können für die Weiterverarbeitung verwendet werden. Vorzugsweise wird das Fleischstück in gefrorenem Zustand mit einer Temperatur geringfügig unter 0° an den Greifarmen des Fahrgestells eingespannt.

Ein Ausführungsbeispiel der Erfindung ist in der Zeichnung dargestellt und wird im folgenden näher beschrieben:

Fig.1 eine Ansicht der Schneidstation mit Stanzeinrichtung einer erfindungsgemäßen Bearbeitungsmaschine in Förderrichtung gesehen;

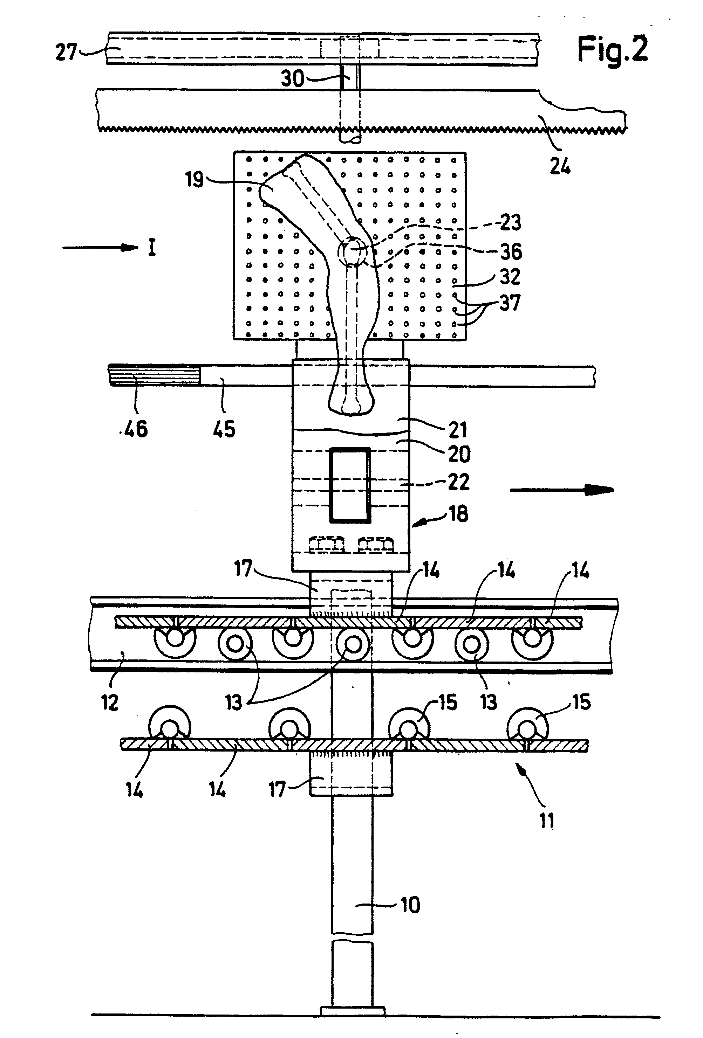

Fig.2 eine Seitenansicht der Schneidstation gemäß Linie II-II der Fig.1;

Fig.3 schematisch gegenüber Fig.1 und 2 abgewandelte zusätzliche Befestigungseinrichtung mit Förderbändern in der Draufsicht;

Fig.4 schematisch eine Seitenansicht eines Teils der Förderbänder gemäß Pfeil IV-IV der Fig.3;

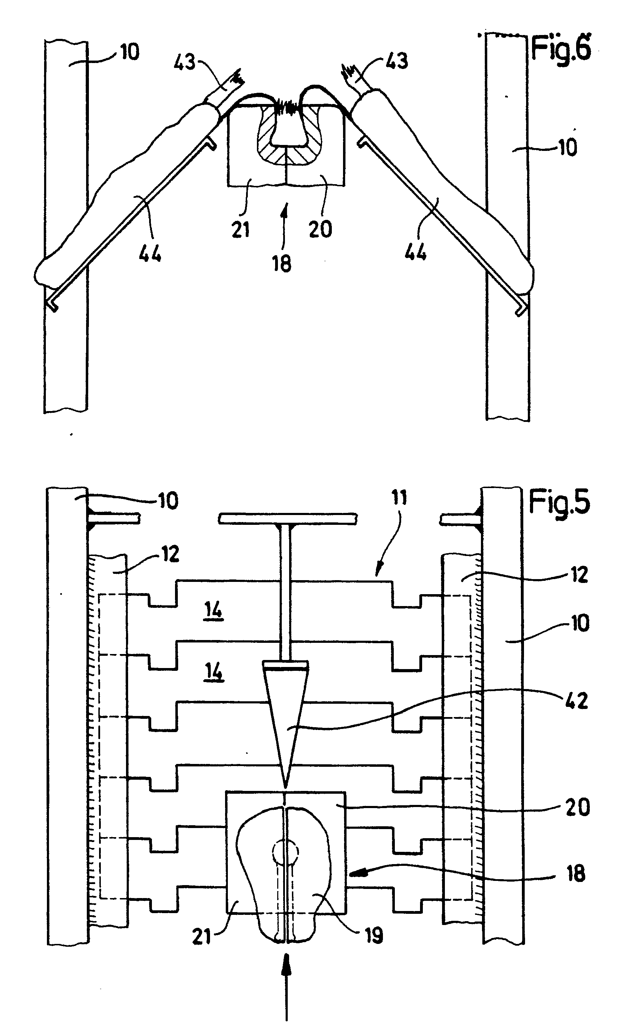

Fig.5 schematisch eine Draufsicht auf eine der Schneidstation nachgeordnete Trennstation mit einem Aufweitkeil für die Werkstückhälften;

Fig.6 eine schematische Ansicht auf die getrennten Werkstückhälften nach dem Durchlaufen der Trennstation;

Fig.7 -9  eine Seitenansicht einer abgeänderten Stanzstation gemäß Fig.1.

Eine Bearbeitungsmaschine für Werkstücke, wie Geflügelteile oder Fleischstücke, hat an einem Maschinengestell 10 einen Fördertrieb mit einer als Scharnierbandkette ausgebildeten Förderkette 11, die in waagerechten Laufschienen 12 geführt ist. Innerhalb der mit einem U-Profil-Träger ausgeführten Laufschienen 12 sind Tragrollen 13 mit waagerechten Achsen angeordnet, auf welchen sich die Kettenglieder 14 abstützen. Die Förderkette 11 weist ein waagerechtes Obertrum und ein darunter befindliches waagerechtes Untertrum auf. Ihre Kettenglieder 14 sind über Scharniere 15 miteinander verbunden. An den Enden der Trums befinden sich Umlenkrollen 16, die am Maschinengestell 10 gelagert sind, für die Förderkette.

An einzelnen Kettengliedern 14 sind Verbindungsträger 17 befestigt, auf welchen jeweils ein Fahrgestell 18 für die Aufnahme eines Werkstücks 19 montierbar ist. Jedes Fahrgestell weist einen festen Greifarm 20 und einen schwenkbaren Greifarm 21 auf, der um eine Schwenkachse 22 an dem Fahrgestell verschwenkbar ist. Die Schwenkachse 22 erstreckt sich in Fahrtrichtung des von der Förderkette 12 bewegten Fahrgestells 18. Im geschlossenen Zustand der Greifarme 20 und 21 bilden diese eine Kaverne, in welcher ein geringer Längenteil des Werkstücks 19 angeordnet und festgeklemmt sein sein kann. Als Werkstücke 19 kommen beispielsweise Geflügelkeulen wie Hähnchenkeulen in Betracht, in welchen sich noch die über ein knorpeliges Gelenk 23 miteinander verbundenen Keulenknochen befinden. Das im Fahrgestell 18 eingespannte Werkstück 19 ragt mit dem größten Teil seiner Länge an der Oberseite des Fahrgestells 18 aus diesem heraus.

Längs des Verlaufs der Laufschienen 12 liegt eine Schneidstation, an welcher das Werkstück 19 längs seiner Knochen aufgeschnitten werden soll, um die Knochenteile bequem auslösen und das Fleisch gesondert gewinnen zu können. Diese Schneidstation ist daher mit einer Bandsäge versehen, deren Sägeband 24 auf ein Antriebsrad und ein von diesem in einem Abstand befindliches Umlenkrad 25 gespannt ist. Das Antriebsrad und das Umlenkrad sind mit senkrechten Drehachsen 26 so an der Schneidstation angeordnet, daß sich der Arbeitsbereich des Sägebandes 24 oberhalb des Fahrgestells 18 und des Raumes befindet, in welchem der größte Teil des Werkstücks 19 von dem Fahrgestell 18 aufragt. Das Antriebsrad und das Umlenkrad 25 lassen sich von einer gemeinsamen Haltevorrichtung in senkrechter Richtung verschieben. Hierzu sind ihre Drehachsen in einem horizontalen Profilträger 27 gelagert, der längs zweier Führungsholmen 28 an der Schneidstation in senkrechter Richtung parallel verschiebbar geführt ist. Ein waagerechter Ausleger 19 verbindet den Profilträger 27 mit der Kolbenstange 30 eines senkrechten Druckmittelzylinders 31, der am Maschinengestell 10 befestigt ist und als doppelt wirkender Pneumatikzylinder ausgebildet sein kann. Beim Ausfahren der senkrechten Kolbenstange 30 werden daher die Räder mit dem Sägeband 24 der Bandsäge aufwärtsbewegt, während beim Einfahren der Kolbenstange 30 in den Druckmittelzylinder 31 das Sägeband 24 senkrecht abwärtsbewegt wird und dabei die Bearbeitung ausführt.

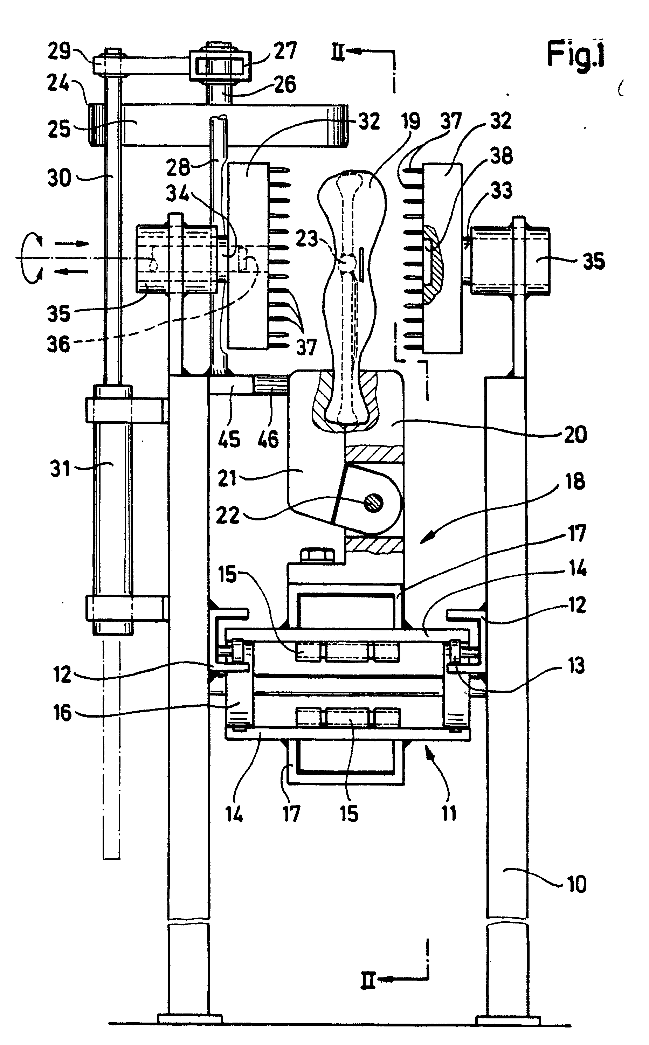

Während des Sägens muß das Werkstück 19 in seiner Lage festgehalten werden. Daher weist die Schneidstation eine zusätzliche Befestigungseinrichtung auf, die aus zwei aufeinandergerichteten senkrechten Nagelplatten 32 besteht (Fig.1), die mit ihren koaxialen Wellen 33 und 34 in Hubzylindern 35 gelagert sind, die an dem Maschinengestell 10 befestigt sind. Mindestens eine Nagelplatte 32 weist zur Dreh- und Querbewegung als Welle 34 eine Hohlwelle auf, die in einem ringförmigen Stanzmesser 36 endet, das an dem zum Werkstück 19 weisenden Ende der Hohlwelle vorsteht und innerhalb der Welle 34 der Nagelplatte 32 axial verschiebbar ist. Nach dem Ausfahren der Welle 33 und 34 aus den Hubzylindern 35 zum Werkstück 19 hin, wodurch die Nägel 37 der Nagelplatten 32 in das Fleisch des Werkstücks 19 eindringen und auf diese Weise das Werkstück 19 festhalten, um das natürliche Gelenk 23 aus der Keule 19 herauszuschneiden. Die gegenüberliegende Nagelplatte 31 zeigt zu diesem Zweck eine Ausnehmung 38, in welcher das Stanzmesser 36 anschlagen und somit das Fleischgewebevollständig ringförmig durchtrennen kann.

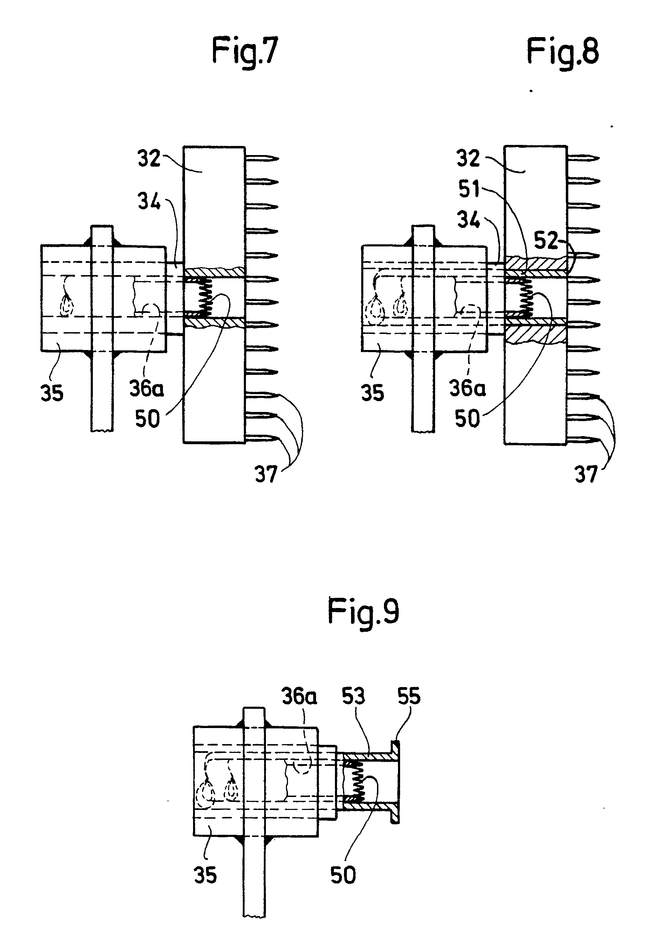

Bei dem in Fig.7 abgeänderten Ausführungsbeispiel ist ebenfalls in dem Hubzylinder 35 die Hohlwelle 34 verschiebbar gelagert, in der die weitere verschiebbare Hohlwelle 36a mit einer vorstehenden Verzahnung 50 anstelle einer ring- und gleichförmigen Schnittkante 36 gelagert ist. Eine solche Verzahnung zeigt besonders gute Halte- und Schnittwirkung rund um einen Gelenkknorpel 23.

Eine weiterhin verbesserte Ausführung zeigt Fig.8. Hier sind in identischer Weise die Hohlwellen 34 und 36a in sich verschiebbar gelagert, jedoch ist zwischen der inneren Hohlwelle 36a mit Verzahnung 50 und der äußeren Hohlwelle 34 eine dritte Hohlwelle 51 gelagert, die ebenfalls wie die innere Hohlwelle 36a sich in Richtung auf das Werkstück 19 verschieben läßt. Diese mittlere Hohlwelle 51 ist stirnseitig als vorstehende ringförmige Haltefläche 52 ausgebildet, die sich auf das Werkstück auflegt und dieses zusätzlich beim Schnitt festhält. Bei dem Ausführungsbeispiel gemäß Fig.9 sind nur zwei Hohlwellen 53 und 36a innerhalb des Hubzylinders 35 verschiebbar gelagert, wobei eine Nagelplatte 32 entfällt und daher an der äußeren Hohlwelle 53 eine endseitige Verbreiterungsfläche 55 vorsteht als Halteeinrichtung für das Werkstück 19. Eine schmal ausgebildete seitliche Haltefläche drückt zusätzlich den Nahbereich des Fleisches um das Knorpelgelenk 23 seitlich fort, so daß der Knorpel 23 selbst zum Schnitt freier liegt.

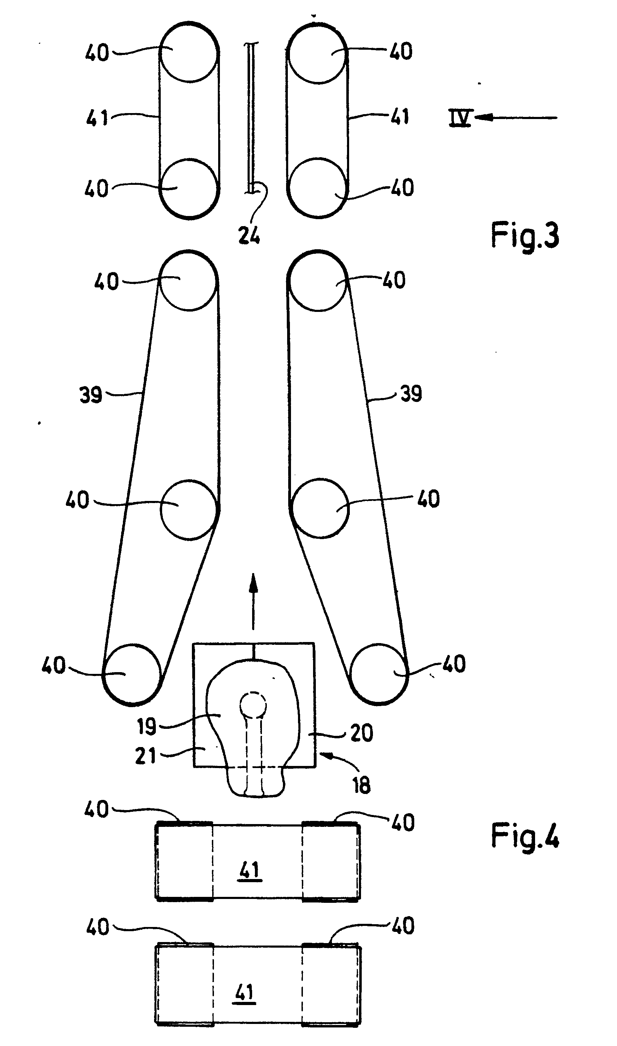

Fig.3 und 4 der Zeichnung zeigen eine abgewandelte zusätzliche Befestigungseinrichtung für das Werkstück 19. Diese besteht aus mehreren Paaren einander zugeordneter Förderbänder. Bei dem ersten Paar von zwei Förderbändern 39 sind an jedem Band drei mit senkrechten Achsen gelagerte Rollen 40 vorgesehen. Die beiden Förderbänder 39 stehen in einem horizontalen Abstand voneinander. Dieser verringert sich von einem größten Wert bei Einlauf des Werkstücks 19 auf einen konstanten kleinsten Wert, der so klein ist, daß das Werkstück 19 zwischen den Förderbändern 39 festgehalten wird. Diesem Paar von Förderbändern 39 können ein oberes und ein unteres Paar von Förderbändern 41 folgen, welche eine waagerechten Abstand einhaltend übereinander angeordnet sind, um einen Durchtrittsraum für das Stanzmesser 36 zu bilden. Die Förderbänder 41 sind ebenfalls auf Rollen 40 mit senkrechten Achsen gespannt.

Nach dem Verlassen der Sägestation gelangt das Fahrgestell 18 mit dem zerschnittenen Werkstück 19 in eine Trennstation der Bearbeitungsanlage. Hier wird das auf dem größten Teil seiner Länge aufgeschnittene Werkstück 19 weiterhin an seinem unteren Ende von den Greifarmen 20 und 21 des Fahrgestells 18 gehalten und fährt mit seiner Trennfuge gegen die Spitze eines Aufweitkeils 42. Beim Weiterfahren trennt der Aufweitkeil 42 die beiden Hälften des Werkstücks 19, so daß diese bis zum Bruch des Knochens der Unterkeule an dessen Einspannstelle voreinander getrennt werden und als bearbeitete Stücke abgeführt werden können. Die Knochenhälften 43 lassen sich nun in einfacher Weise aus den Schnittebenen der Werkstückteile 44 herausnehmen.

Zum Schließen der Greifarme 20 und 21 weist die Bearbeitungsanlage eine Druckschablone 45 auf, an deren schräger Fläche 46 der schwenkbare Greifarm 21 während der Fahrt des Fahrgestells 18 entlanggleitet und dort an den festen Greifarmen 20 gedrückt und somit in die Schließstellung verschwenkt wird. Das in dieser Stellung befestigte Werkstück 19 fährt mit dem Fahrgestell 18 in die Schneidstation und hält an. Nun fahren die Nagelplatten 32 auf das Werkstück zu und halten es in der Schneidstation fest, so daß anschließend das Ausstanzen des knorpeligen Gelenks 23 und das Sägen entlang den Knochen des Werkstücks 19 erfolgen kann. Nachdem das Sägeband 24 aus dem Bearbeitungsbereich wieder herausgefahren ist, fahren die Nagelplatten 32 zurück in ihre Ausgangsstellung, so daß das Werkstück 19 wieder freigegeben wird. Nun kann das Fahrgestell 18 weiterfahren und in die Trennstation gelangen, wo der Aufweitkeil 42 die beiden Teile des Werkstücks 19 auseinanderdrückt, bis deren Knochenhälften 43 an den Einspannstellen abbrechen. Die so entstandenen Werkstückteile 44 können dann von dem Fahrgestell 18 entfernt und die Knochenhälften 43 aus aus dem Fleisch ausgelöst werden. Inzwischen hat die Förderkette 11 das nächste Fahrgestell 18 mit einem neuen Werkstück 19 in die Schneidstation zum Aufschneiden gefördert.

Der Durchmesser der ringförmigen Schneideinrichtung 36, 50 ist abhängig davon, ob nur der Knorpel 23 allein zwischen einer Oberkeule und Unterkeule (kleiner Durchmesser) oder ob auch die benachbarten Knochenverdickungen mit herausgestanzt werden (großer Durchmesser).

## Patentansprüche

1. Bearbeitungsmaschine für Geflügelteile, Fleischstücke o.dgl., als Werkstücke, mit einer umlaufenden Fördereinrichtung wie Kette (13), Band o.dgl., an welcher als Haltevorrichtungen Fahrgestelle (17) mit Greif- oder Klemmeinrichtungen (20) für das Festhalten jeweils eines Werkstücks (19) augeordnet sind, gekennzeichnet durch eine den Knorpel (23), Knochen o.dgl. aus den Fleisch austrennende, stanzenartige, ringförmige Schneideinrichtung (36), die quer zur Bewegungsrichtung des Fahrgestells (17) automatisch verschiebbar am Maschinengestell (10) gelagert ist.

2. Bearbeitungsmaschine nach Anspruch 1, dadurch gekennzeichnet, daß die Schneideinrichtung mit einer rohrförmigen, dem Umfang des Knorpels (23) entsprechenden Stanzeinrichtung (36) mit Schnittkante, Schneidzähnen o.dgl. ausgestattet ist.

3. Bearbeitungsmaschine nach Anspruch 1 oder 2, dadurch gekennzeichnet, daß die Stanzeinrichtung (36) mit einer Halteeinrichtung (32) für das Fleisch gekuppelt ist.

4. Bearbeitungsmaschine nach den Ansprüchen 1 bis 3, dadurch gekennzeichnet, daß die Welle (Achse) (34) einer Halteeinrichtung (32) als drehbare und verschiebbare Hohlwelle (36) innerhalb eines Hubzylinders (35) ausgebildet ist.

5. Bearbeitungsmaschine nach den Ansprüchen 1 bis 4, dadurch gekennzeichnet, daß in der Hohlwelle (34) der Halteeinrichtung (32) eine hohle Lagerachse (36) eines aus der Halteeinrichtung (32) ausfahrbaren ringförmigen Stanzmessers (36a, 53) für das Werkstück (19) angeordnet ist.

6. Bearbeitungsmaschine nach den Ansprüchen 1 bis 4, dadurch gekennzeichnet, daß die Hohlwelle (53) mit einem endseitigen Haltestempel (55) wie Ring, Rechteck o.dgl. ausgebildet ist.

7. Bearbeitungsmaschine nach den Ansprüchen 1 bis 6, dadurch gekennzeichnet, daß in der Hohlwelle (53) mit Haltestempel (55) eine weitere Hohlwelle (36a) mit Schneidkanten, Schneidzähnen als Stanzeinrichtung (50) angeordnet ist.

8. Bearbeitungsmaschine nach den Ansprüchen 1 bis 9, dadurch gekennzeichnet, daß die zusätzliche Befestigungseinrichtung für das Werkstück (19) von zwei senkrechten Nagelplatten (32) gebildet ist, welche oberhalb des Bereichs des Fahrgestells (18) horizontal gegeneinander bewegbar sind.

9. Bearbeitungsmaschine nach den Ansprüchen 1 bis 10, dadurch gekennzeichnet, daß die Nagelplatten (32) von horizontalen Wellen (33, 34) gehalten sind, die aus am Maschinengestell (10) befestigten Hubzylindern (35) ausfahrbar sind.

10. Bearbeitungsmaschine nach den Ansprüchen 1 bis 9, dadurch gekennzeichnet, daß der Schneideinrichtung (36) eine Säge als Bandsäge (24) als Längsband vorgeschaltet ist, die mit einem Antriebsrad und einem Umlenkrad (25) mit senkrechten Drehachsen (26) und dem auf dieser Räder gespannten endlosen Sägeband (24) ausgebildet ist, wobei der Sägebereich oberhalb der Förderkette (11) liegt.

11. Bearbeitungsmaschine nach Anspruch 10, dadurch gekennzeichnet, daß die Drehachsen (26) des Antriebsrades und des Umlenkrades (25) in einem waagerechten Profilträger (27) gelagert sind, welcher längs senkrechter, an einem Maschinengestell (10) befestigter Führungsholme (28) verschiebbar ist.

12. Bearbeitungsmaschine nach den Ansprüchen 1 bis 11 dadurch gekennzeichnet, daß die zusätzliche Befestigungseinrichtung für das Werkstück (19) von Förderbandpaaren (39) gebildet ist, wobei zwischen zwei um Rollen (40) mit senkrechten Achsen geführten Förderbändern (39, 41) eines Paars jeweils ein Aufnahmeabstand für das Werkstück (19) eingehalten ist.

13. Bearbeitungsmaschine nach den Ansprüchen 1 bis 12, dadurch gekennzeichnet, daß in Förderrichtung vor der Schneideinrichtung mit dem Sägeband (24) eine Trennstation mit einem festen Aufweitkeil (42) für Teile des gesägten Werkstücks (19) angeordnet ist.

**Claims**

1. A machine for processing objects such as poultry parts, meat pieces or the like, comprising an endless conveyor means, such as a chain (13), belt or the like, on which there are arranged displacement frames (18) which serve as holding means and include gripping or clamping means (20) for holding a respective object (19), characterized by a punch-type annular cutting means (36) which dissociates the cartilage (23), bone or the like from the meat and is automatically displaceable in a direction transverse to the moving direotion of said displacement frame (18) and supported on a machine frame (10).

2. A processing machine as defined in claim 1, characterized in that said cutting means is equipped with a tubular punching means (36) which has a diameter corresponding to the circumference of the cartilage (23) and includes cutting edges, cutting teeth or the like.

3. A processing machine as defined in claim 1 or 2, characterized in that said punching means (36) is coupled with a holding means (32) for the meat.

4. A processing machine as defined in claims 1 to 3, characterized in that the shaft (axle) (34) of said holding means (32) is configured as a rotatable and shiftable hollow shaft (36) inside a lifting cylinder (35).

5. A processing machine as defined in claims 1 to 4, characterized in that said hollow shaft (34) of said holding means (32) accommodates a hollow support shaft (36) of an annular punching knife (36a, 53) for said object (19), said punching knife being adapted to be shifted out of said holding means (32).

6. A processing machine as defined in claims 1 to 4, characterized in that said hollow shaft (53) is provided at the end side with a holding punch (55) of an annular, rectangular or similar configuration.

7. A processing machine as defined in claims 1 to 6, characterized in that an additional hollow shaft (36a) which is provided with cutting edges or cutting teeth as punching means (50) is arranged in said hollow shaft (53) equipped with said holding punch (55).

8. A processing machine as defined in claims 1 to 9, characterized in that an additional holding means for said object (19) is formed by two vertical nail plates (32) which are horizontally movable relative to each other above the region of said displacement frame (18).

9. A processing machine as defined in claims 1 to 10, characterized in that said nail plates (32) are held by horizontal shafts (33, 34) which are movable out of lifting cylinders (35) mounted on said machine frame (10).

10. A processing machine as defined in claims 1 to 9, characterized in that said cutting means (36) has arranged upstream thereof a saw as a longitudinal band saw (24) which is provided with a driving wheel and a guide wheel (25) having vertical rotational axles (26) and with an endless sawing band (24) tensioned on said wheels, the sawing area being located above a conveyor chain (11).

11. A processing machine as defined in claim 10, characterized in that said rotational axles (26) of said driving wheel and said guide wheel (25) are supported in a horizontal profiled carrier (27) which is displaceable along vertical guide rods (25) mounted on said machine frame (10).

12. A processing machine as defined in claims 1 to 11, characterized in that said additional fastening means for said object (19) is formed by conveyor belt pairs (39), a receiving distance for said object (19) being respectively observed between two conveyor belts (39, 41) of a pair which are guided around rollers (40) with vertical axes.

13. A processing machine as defined in claims 1 to 12, characterized in that a separating station including a stationary spreading wedge (42) for parts of the sawed object (19) is arranged in the conveying direction downstream of said cutting means including said sawing band (24).

**Revendications**

1. Machine pour le traitement de morceaux de volaille, de pièces de viande ou similaires servant de pièces à traiter, laquelle comprend un dispositif transporteur continu comme une chaîne (13), une bande ou similaire sur laquelle sont disposés des chariots (18) qui servent de dispositifs de maintien et qui sont munis de dispositifs de préhension ou de serrage (20) pour maintenir une pièce (19) à chaque fois, caractérisée par un dispositif de coupe (36), annulaire et analogue à un emporte-pièce, qui sépare de la chair le cartilage (23), l'os ou similaire, et qui est monté sur le bâti (10) de la machine en pouvant être déplacé automatiquement dans le sens transversal par rapport à la direction de déplacement du chariot (18).

2. Machine de traitement selon la revendication 1, caractérisée par le fait que le dispositif de coupe est équipé d'un dispositif de détourage tubulaire (36) qui correspond au pourtour du cartilage (23) et qui est muni de bords tranchants, de dents de découpage ou similaires.

3. Machine de traitement selon la revendication 1 ou 2, caractérisée par le fait que le dispositif de détourage (36) est accouplé à un dispositif de maintien (32) destiné à la chair.

4. Machine de traitement selon les revendications 1 à 3, caractérisée par le fait que l'arbre (axe) (34) d'un dispositif de maintien (32) est réalisé sous la forme d'un arbre creux tournant et coulissant (36) disposé à l'intérieur d'un vérin (35).

5. Machine de traitement selon les revendications 1 à 4, caractérisée par le fait qu'est disposé dans l'arbre creux (34) du dispositif de maintien (32) un axe creux (36) d'un couteau de détourage annulaire (36a ,53) qui est destiné à la pièce (19) et que l'on peut faire sortir du dispositif de maintien (32).

6. Machine de traitement selon les revendications 1 à 4, caractérisée par le fait que l'arbre creux (53) est conformé de façon à comprendre du côté de son extrémité un poinçon de maintien (55) comme une bague, un rectangle ou similaire.

7. Machine de traitement selon les revendications 1 à 6, caractérisée par le fait qu'est disposé dans l'arbre creux (53) muni du poinçon de maintien (55) un autre arbre creux (36a) qui est muni de bords tranchants ou de dents de coupe et qui sert de dispositif de détourage (50).

8. Machine de traitement selon les revendications 1 à 7, caractérisée par le fait que le dispositif de fixation supplémentaire destiné à la pièce (19) est constitué par deux plaques à clous verticales (32) qui peuvent être déplacées horizontalement l'une vers l'autre au-dessus de la région du chariot (18).

9. Machine de traitement selon les revendications 1 à 8, caractérisée par le fait que les plaques à clous (32) sont maintenues par des arbres horizontaux (33, 34) qui peuvent sortir de vérins (35) fixés au bâti (10) de la machine.

10. Machine de traitement selon les revendications 1 à 9, caractérisée par le fait qu'est montée en amont du dispositif de coupe (36) une soie qui est réalisée sous la forme d'une scie (24) à ruban longitudinal et qui est constituée par une roue d'entraînement et une roue de renvoi (25) à axes de rotation verticaux (26) et par le ruban de soie sans fin (24) tendu sur ces roues, la zone de sciage étant située au-dessus de la chaîne transporteuse (11).

11. Machine de traitement selon la revendication 10, caractérisée par le fait que les axes de rotation (26) de la roue d'entraînement et de la roue de renvoi (25) sont montés tournants dans une poutre profilée horizontale (27) qui peut être déplacée le long de montants de guidage verticaux (28) fixés à un bâti (10) de la machine.

12. Machine de traitement selon les revendications 1 à 11, caractérisée par le fait que le dispositif de fixation supplémentaire destiné à la pièce (19) est constitué par des paires de bandes transporteuses (39), un écartement destiné à recevoir la pièce (19) étant à chaque fois conservé entre deux bandes transporteuses (39, 41) d'une paire qui sont guidées autour de rouleaux (40) à axes verticaux.

13. Machine de traitement selon les revendications 1 à 12, caractérisée par le fait qu'en amont du dispositif de découpage muni du ruban de sciage (24) dans la direction du déplacement, est disposé un poste de séparation comprenant un coin d'élargissement fixe (42) qui est destiné à des parties de la pièce sciée (19).

Fig.1

Fig.2

40

40

41

41

IV ←

40

40

24

Fig.3

40

40

39

39

40

40

40

40

19

20

21

18

40

40

41

Fig.4

40

40

41

10

Fig.6

Fig.5

# Fig.7

# Fig.8

# Fig.9